# EUROPEAN PATENT SPECIFICATION

(11) **EP 4 360 766 B1**
(45) Date of publication and mention of the grant of the patent: **18.03.2026**
(21) Application number: 24154283.6
(22) Date of filing: 22.03.2023
(51) Int. Cl.: B05C 3/109, B29D 11/00, B05D 1/18

(54) **LACQUER BASIN, COATING DEVICE, METHOD FOR DIP COATING AN OPHTHALMIC LENS AND METHOD FOR MANUFACTURING AN OPHTALMIC LENS**
LACKWANNE, BESCHICHTUNGSVORRICHTUNG, VERFAHREN ZUM TAUCHBESCHICHTEN EINER OPHTHALMISCHEN LINSE UND VERFAHREN ZUR HERSTELLUNG EINER OPHTHALMISCHEN LINSE
BASSIN DE LAQUE, DISPOSITIF DE REVÊTEMENT, PROCÉDÉ DE REVÊTEMENT PAR IMMERSION D'UNE LENTILLE OPHTALMIQUE ET PROCÉDÉ DE FABRICATION D'UNE LENTILLE OPHTALMIQUE

(30) Priority: 29.03.2022 EP 22165047
(43) Date of publication of application: 01.05.2024
(62) Divisional of application: 23712295.7
(73) Proprietor: Carl Zeiss Vision International GmbH, 73430 Aalen (DE)
(72) Inventor: KURZ, Norbert, 73434 Aalen (DE); WILHELM, Christian, 73433 Aalen (DE); WIDMANN, Wolfgang, 73565 Spraitbach (DE)
(74) Representative: Pearl Cohen EU

(56) References cited:
- US-A1- 2004 000 487
- US-A1- 2013 137 242

## Description

Provided are a lacquer basin, a coating device for dip coating an ophthalmic lens, a method for dip coating an ophthalmic lens and a method for manufacturing an ophthalmic lens. The embodiments are, thus, related to dip coating of ophthalmic lenses.

Ophthalmic lenses or lens blanks are typically provided with coatings for protection against mechanical influences and/or for providing desired surface properties to the ophthalmic lens. Details about the ophthalmic lenses and/or lens blanks may be specified in the standard ISO 10322-1:2016. Dip coating processes using a dip coating device are often used for applying such coatings to ophthalmic lenses or lens blanks. A dip coating device typically comprises a lacquer basin, in which a lacquer mixture comprising the lacquer and a solvent are injected in the bottom of the lacquer basin and streams into the lacquer basin in an upward direction. The stream of lacquer mixture then exits the lacquer basin though an opening at the top and is collected in an overflow channel, from where it will be fed into the circulation system undergoing filtering, cooling and a resupply with lacquer and/or solvent. For instance, US6180310B1 describes a conventional device and a conventional method for dip coating ophthalmic lenses. The dip coating device described in US6180310B1 comprises a dip coating vessel and a tubing system connecting the dip coating vessel with a solution vessel such that a stream of lacquer mixture can circulate through the tubing system, the dip coating vessel and the solution vessel. The dip coating vessel has a conical section and a cylindrical section adjoining the conical section. Such a configuration can result in the occurrence of a turbulent flow of the lacquer mixture in the dip coating vessel. In order to achieve a homogeneous coating performance and coatings of a uniform thickness without inclusions of bubbles and/or particles, a homogeneous stream of the lacquer mixture inside the lacquer basin is desired. However, the injection of the lacquer mixture from an injection nozzle at the bottom of the lacquer basin and the larger dimensions of the lacquer basin compared to the injection nozzle often result in a turbulent flow of the stream of lacquer mixture in the lacquer basin, which renders a homogeneous coating performance hard to be achieved.

US 5 681 392 A describes a reservoir for dipping a non-cylindrical flexible belt into a coating fluid, wherein a flow director and a porous membrane may be arranged inside the reservoir. US 2003/064164 A1 describes an apparatus for coating a photodetector substrate, which may comprise at least one porous element such as a grid, screen or mesh for suspending a plurality of layers of non-contaminating rounded objects. US 5 824 276 A describes an apparatus and a method for uniformly contacting an article with a treatment solution.

The problem, thus, relates to providing a dip coating method, a dip coating device and a lacquer basin providing coatings of improved homogeneity. Moreover, the problem relates to providing coated ophthalmic lenses with reduced coating defects and, thus, reduced manufacturing costs.

This problem is solved by features of the respective independent claim. Optional embodiments are provided in the dependent claims and the description.

In one aspect a lacquer basin for a dip coating device is provided. The lacquer basin comprises an inlet section arranged at a lower end of the lacquer basin and adapted to receive a stream of a lacquer mixture injected into the lacquer basin. The lacquer basin further comprises a process section adjoining the inlet section at an upper end of the inlet section, wherein the process section is adapted to provide a process volume for dip coating one or more objects in the stream of the lacquer mixture. In addition, the lacquer basin comprises a diversion element arranged at or near a transition from the inlet section to the process section, which is adapted to divert at least a part of the stream of the lacquer mixture such as to reduce or avoid turbulences of the stream of lacquer mixture in the process section.

In another aspect a lacquer basin for a dip coating device is provided. The lacquer basin comprises an inlet section arranged at a lower end of the lacquer basin and adapted to receive a stream of a lacquer mixture injected into the lacquer basin. The lacquer basin further comprises a process section adjoining the inlet section at an upper end of the inlet section, wherein the process section is adapted to provide a process volume for dip coating one or more objects in the stream of the lacquer mixture. Moreover, the lacquer basin comprises a diversion element arranged at or near a transition from the inlet section to the process section and adapted to divert at least a part of the stream of the lacquer mixture such as to reduce or avoid turbulences of the stream of lacquer mixture in the process section. The lacquer basin is characterized in that the diversion element comprises two or more barrier layers arranged at different levels spaced apart from each other, wherein each of the barrier layers has multiple recesses and intermittently covers the cross sectional area of the lacquer basin, wherein each of the barrier layers is permeable for the stream of the lacquer mixture through the multiple recesses and wherein the two or more barrier layers are adapted and/or arranged such that their recesses are arranged in a complementary manner over the cross sectional area of the lacquer basin.

In another aspect a use of a diversion element for reducing or avoiding turbulences of a stream of lacquer mixture in a process section of a lacquer basin is provided, wherein the diversion element is arranged at or near a transition from an inlet section to the process section of the lacquer basin and adapted to divert at least a part of the stream of the lacquer mixture. The use of the diversion element is characterized in that the diversion element comprises two or more barrier layers arranged at different levels spaced apart from each other, wherein each of the barrier layers has multiple recesses and intermittently covers the cross sectional area of the lacquer basin, wherein each of the barrier layers is permeable for the stream of the lacquer mixture through the multiple recesses and wherein the two or more barrier layers are adapted and/or arranged such that their recesses are arranged in a complementary manner over the cross sectional area of the lacquer basin.

In another aspect, a use of a diversion element for reducing or avoiding turbulences of a stream of lacquer mixture in a process section of a lacquer basin is provided, wherein the diversion element is arranged at or near a transition from an inlet section to the process section of the lacquer basin and adapted to divert at least a part of the stream of the lacquer mixture.

In yet another aspect, a coating device for dip coating an ophthalmic lens having a lacquer basin is provided. The lacquer basin of the coating device comprises an inlet section arranged at a lower end of the lacquer basin, which adapted to receive a stream of a lacquer mixture injected into the lacquer basin. The lacquer basin further comprises a process section adjoining the inlet section at an upper end of the inlet section, wherein the process section is adapted to provide a process volume for dip coating the ophthalmic lens in the stream of the lacquer mixture. The lacquer basin further comprises a diversion element arranged at or near a transition from the inlet section to the process section and adapted to divert at least a part of the stream of the lacquer mixture such as to reduce or avoid turbulences of the stream of lacquer mixture in the process section.

In yet another aspect, a method for dip coating an ophthalmic lens is provided. The method comprises providing a coating device according to an embodiment of the present disclosure. The method further comprises dipping the ophthalmic lens into the process section of the coating device such that the ophthalmic lens is entirely immersed in the stream of the lacquer mixture. The method further comprises removing the ophthalmic lens from the process section and curing the lacquer mixture adhering to the ophthalmic lens.

In yet another aspect a method for manufacturing an ophthalmic lens is disclosed, the method comprising a method for dip coating an ophthalmic lens according to the disclosure.

In yet another aspect, an ophthalmic lens is provided. The ophthalmic lens has a coating applied to the ophthalmic lens by dip coating the ophthalmic lens using a dip coating device according to an embodiment of the present disclosure.

In yet another aspect a lacquer basin for a dip coating device is provided. The lacquer basin comprises an inlet section arranged at a lower end of the lacquer basin and adapted to receive a stream of a lacquer mixture injected into the lacquer basin, and a a process section adjoining the inlet section at an upper end of the inlet section, wherein the process section is adapted to provide a process volume for dip coating one or more objects in the stream of the lacquer mixture. The lacquer basin further comprises a diversion element arranged at or near a transition from the inlet section to the process section and adapted to divert at least a part of the stream of the lacquer mixture such as to reduce or avoid turbulences of the stream of lacquer mixture in the process section. The lacquer basin is characterized in that the diversion element comprises a recess adjacent to a sidewall of the lacquer basin.

Dip coating of an ophthalmic lens means that the ophthalmic lens to be coated may be dipped into the lacquer mixture contained in the lacquer basin. For this purpose, the lacquer basin may be at least partly open on the upper side to allow entering the ophthalmic lens. The coating may be for instance a hard coating for increasing a scratch resistance of the ophthalmic lens. For instance, a coating may have a thickness between 1 µm and 5 µm. A coating may be applied to neat ophthalmic lenses or lens blanks having no coating and/or to ophthalmic lenses having already one or more coatings prior to the dip coating. The device may be adapted to sequentially dip coat multiple ophthalmic lenses and/or to dip coat more than one ophthalmic lens at least partly in parallel.

The lacquer mixture is a liquid comprising the lacquer and a solvent, wherein a viscosity of the lacquer mixture may be adjusted by modifying a relative concentration, i.e. a relative mixing ratio, of the lacquer and the solvent. Dosing the lacquer and/or the solvent may comprise controlling the supplied amounts of lacquer and/or solvent.

The lacquer basin may be a receptacle having an inlet for feeding an influx of the lacquer mixture into the lacquer basin and may be opened at the top to allow inserting one or more ophthalmic lenses into the lacquer mixture for dip coating. The lacquer mixture may be continuously provided to the lacquer basin to achieve a laminar flow, wherein the laminar flow and a displacement of volume of lacquer mixture due to an insertion of an ophthalmic lens may provoke an overflow flow of lacquer mixture from the lacquer basin into the overflow channel. The overflown lacquer mixture is collected from the overflow channel and fed into the tubing system as a return flux. The overflow channel is arranged directly at an outer side of a side wall of the lacquer basin. In particular, the outer side of the side wall of the lacquer basin may form an inner wall of the overflow channel. However, the overflow channel may also be provided in the form of an overflow basin arranged around and/or underneath the lacquer basin. The overflow channel may be provided in one piece with the lacquer basin and/or separately from the lacquer basin. The lacquer basin may have a vertically extending central axis, wherein the process section adjoins the inlet section along the central axis of the lacquer basin.

The section of the lacquer basin, in which the ophthalmic lens is inserted for dip coating is referred to as the process section. The process section may have an extension along the central axis of the lacquer basin which is equal to or larger than the extension of the ophthalmic lens(es) to be dip coated. In particular, the process section may have a depth being equal to or larger than the ophthalmic lens to allow immersing the ophthalmic lens entirely into the lacquer mixture when dip coating the ophthalmic lens.

The section of the lacquer basin in which the lacquer mixture is injected into the lacquer basin and in which the stream of lacquer mixture establishes a flow of the lacquer mixture within the lacquer basin is referred to as inlet section. An injection nozzle for injecting the lacquer mixture into the inlet section of the lacquer basin may be provided at the inlet of the inlet section. The lacquer basin may have a conical shape in the inlet section in order to reduce the pressure and/or velocity of the lacquer mixture injected into the lacquer basin.

The lacquer basin may be formed as a single piece, wherein the inlet section and the process section relate to different parts of the single-pieced lacquer basin. However, the lacquer basin may be formed from several pieces. A side wall of the inlet section may have a different shape than the side wall of the process section. For instance, the side wall may have a cylindrical shape in the process section and a conical shape in the inlet section. The transition between the inlet section and the process section may be such a part of the side wall, in which the side wall changes its slope. However, according to some embodiments, the transition may be unrelated to a change of slope of the side wall and may be merely defined by the stream of the injected lacquer mixture having completed its spatial extension after the injection. The diversion element being arranged at or near the transition from the inlet section to the process section means that the diversion element is arranged at a position along the central axis, which corresponds to the position, at which the inlet section transits into the process section. "Near" means that the diversion element is spaced from the position along the central axis of the transition not more than 10% of the total extension of the inlet section and the process section in either direction.

A diversion element is a rigid element forming a barrier for at least a part of the stream of the lacquer mixture inside the lacquer basin. The diversion element is arranged to divert at least a part of the stream of the lacquer mixture and may form an obstacle which cannot be penetrated by vortexes and turbulences occurring in the inlet section underneath the diversion element. The diversion element, thus, may homogenize the flow of the stream of lacquer mixture and, hence, provide a laminar flow after the diversion element, i.e. in the process section of the lacquer basin. The diversion element may have a sufficient rigidity to sustain the pressure of the stream of the lacquer mixture impinging on the diversion element. For instance, the diversion element may comprise one or more metal sheets having recesses to divert and let pass at least a part of the stream of the lacquer mixture. The ratio of recesses and blocking parts of the diversion element may be chosen such that no undesired backlog of lacquer mixture occurs at the side of the diversion element facing the inlet section.

The diversion element comprising a recess adjacent to the sidewall of the lacquer basin may relate to a gap between the diversion element and the sidewall of the lacquer basin. The recess may be a through hole or comprise one or more through holes. The recess may extend in a continuous manner along the entire inner circumference of the sidewall or may be interrupted at one or several positions along the inner circumference of the sidewall.

The disclosure provides the advantage that a laminar flow of the stream of the lacquer mixture can be achieved in the process section. By this, the homogeneity of the dip coatings achieved in the dip coating process may be increased and, hence, the quality of the obtainable coatings may be increased. Hence, ophthalmic lenses having a better quality can be provided as compared with ophthalmic lenses coated with conventional methods. Moreover, the ophthalmic lenses may be manufactured with a reduced number of defects and, hence, at lower manufacturing costs. In other words, the disclosure provides the advantage that a turbulent flow of the stream of the lacquer mixture in the lacquer basin may be restricted to the inlet section of the lacquer basin. Due to the diversion element being arranged at or near the transition from the inlet section to the process section, the stream of the lacquer mixture can be diverted and homogenized and the occurrence of turbulences can be avoided in the process section of the lacquer basin.

The disclosure provides the further advantage that the diversion element slows down the stream of the lacquer mixture before entering the process section. This may further facilitate achieving a laminar flow of the stream of lacquer mixture in the process section and may in particular reduce or prevent the level of the lacquer mixture in the lacquer basin forming a bulge. Hence, the disclosure provides the advantage that the stream of lacquer mixture in the process section may be effectively calmed down and agitation of the stream of the lacquer mixture arising from its circulation through the lacquer basin and the connected supply tubing by pumping may be relaxed. The lacquer basin is, thus, adapted to restrict a turbulent flow of the stream of lacquer mixture to the inlet section and to provide a laminar flow of the stream of the lacquer mixture in the process section. Moreover, the disclosure provides the advantage that due to the laminar flow undesired contaminants in the stream of the lacquer mixture, such as particles, may be carried out to the overflow channel in a more efficient manner.

Furthermore, the disclosure provides the advantage that the homogeneous laminar flow in the process section avoids vortexes and turbulences, which may otherwise trap particles and contaminants in the process section. Hence, the undesired presence of contaminants in the process section can be avoided or reduced.

In particular, the recess adjacent to the sidewall may provide the advantage of allowing a sedimentation of particles and/or contaminants along the sidewall in a downward direction. This may provide an efficient manner for keeping particles, such as solidified lacquer particles, and/or contaminants out of the provided laminar flow of lacquer.

The diversion element may extend perpendicular to the central axis of the lacquer basin. For a lacquer basin having a cylindrical side wall in the process section, the diversion element may in particular extend perpendicular to the side wall of the lacquer basin. Such an arrangement may result in the diversion element being arranged perpendicular to the main flow direction of the stream of lacquer mixture in the inlet section. This bears the advantage that the stream of the lacquer mixture impinges on the diversion element at essentially the same velocity and pressure over the entire cross sectional area (perpendicular to the central axis) of the diversion element. This may further increase the homogeneity of the laminar flow in the process section.

The diversion element may comprise two or more barrier layers arranged at different levels axially spaced apart from each other with regard to the central axis. Each of the barrier layers may have multiple recesses and may intermittently cover the cross sectional area of the lacquer basin. The cross sectional area of the lacquer basin shall mean the area of the inner volume of the lacquer basin enclosed by the side wall of the lacquer basin in the process section in a plane perpendicular to the central axis. Intermittently covering the cross sectional area of the lacquer basin means that the cross sectional area of the lacquer basin may be partly covered by each barrier layer, wherein the multiple recesses allow at least a part of the stream of lacquer mixture to penetrate the barrier layer. Hence, each of the barrier layers is permeable for the stream of the lacquer mixture through the multiple recesses. In other words, each barrier layer and the diversion element in total is adapted not to entirely block the stream of the lacquer mixture but to slow down the stream of the lacquer mixture by diverting the stream of the lacquer mixture.

The two or more barrier layers may be adapted and/or arranged such that their recesses are arranged in a complementary manner over the cross sectional area of the lacquer basin. "Arranged in a complementary manner" means that the two or more barrier layers are adapted and arranged with respect to each other such that the projection of each recess in one of the barrier layers in the cross sectional area of the lacquer basin perpendicular to the central axis is covered by at least one further barrier layer not having a recess at the very same position in the projection. In other words, the barrier layers do not allow a direct passage of the stream of lacquer mixture through the diversion element but require the stream of the lacquer mixture to change their flow direction at least once for penetrating the barrier layers and, hence, for penetrating the diversion element.

The recesses in the at least two barrier layers may have the same size or at least nearly the same size, which means that their sizes differ from each other by not more than 20% of the size of the smallest recess. The barrier layers may be formed by lamellas and recesses separating the lamellas from each other. The lamellas of the barrier layers between the recesses may be arranged such that they do not overlap in the cross sectional projection perpendicular to the central axis of the lacquer basin with lamellas or bridges of another or the adjacent barrier layer. Optionally the recesses are formed such that the recesses and bridges or lamellas for two adjacent barrier layers are entirely complementary and, thus, do not overlap in the cross sectional projection. This may reduce a possible loss of flow velocity of the stream of the lacquer mixture.

The combination of the two or more barrier layers may cover at least 70%, optionally at least 80%, optionally at least 90% and optionally at least 95% of the cross sectional area of the lacquer basin. In particular, the combination of the two or more barrier layers may cover the entire cross sectional area of the lacquer basin except a recess adjacent to the sidewall of the lacquer basin. The latter recess may be located between the sidewall of the lacquer basin and the outer circumference of the barrier layers. Said recess may ensure that possible contaminations may sink to the bottom of the lacquer basin along the side wall and may pass the barrier layers through the recess adjacent to the side wall. The area adjacent to the side wall may be suitable for enabling contaminants to sink to the bottom, as the flow velocity of the stream of lacquer mixture is typically zero at the side wall, which may, hence, favor the sedimentation of contaminants to the bottom of the lacquer basin by travelling in an opposite direction to the general flow direction of the stream of lacquer mixture. The recess may still be regarded as a recess, even if the barrier layers or the diversion element as such are mechanically fixed to the side wall of the lacquer basin and the mechanical fixation interrupts the recess at one or more positions or sections.

The recess adjacent to the sidewall of the lacquer basin may be interrupted by one or more mechanical fixation elements fixating the diversion element to the sidewall. This may facilitate a fixation of the diversion element to the sidewall of the lacquer basin.

A width of the recess adjacent to the sidewall of the lacquer basin may be 0,2 mm or more and/or 2 mm or less. The width may be an extension of the recess in a direction perpendicular to the vertically extending central axis of the lacquer basin. This may provide a passage of sufficient size to allow a sedimentation of particles and/or contaminants through the recess and still provide a sufficient barrier for the stream of lacquer in an upward direction. The width of the recess adjacent to the sidewall may be constant along the entire inner circumference of the sidewall. Alternatively, the width of the recess may vary along the inner circumference of the sidewall. The recess may comprise multiple sections along the inner circumference of the sidewall, wherein the multiple sections may have the same width or may differ in their width with respect to each other. Optionally the recess adjacent to the side wall of the lacquer basin extends around the entire inner circumference of the sidewall or only a part of the inner circumference of the sidewall.

The lacquer basin may further comprise a sedimentation section underneath the inlet section for collecting sedimented particles. This may ensure that the sedimented particles and contaminants are not re-injected with the injection of lacquer mixture by the injection nozzle arranged in the inlet section.

The barrier layers may have a grid-like structure and/or a mesh-like structure. In some embodiments, the barrier layers may be formed of multiple lamellas arranged to provide a recess between adjacent lamellas. The lamellas may be arranged to form a rectangular or polygonal grid. Alternatively or additionally, the barrier layers may be formed by circular and/or elliptical lamellas providing circular and/or elliptical recesses between the adjacent lamellas. Thus, at least some of the recesses of the barrier layers may be ring-shaped and/ have a circular shape and/or a polygonal shape. This may allow a high level of homogeneity of the stream of lacquer mixture passing through the barrier layers. The barrier layers may have a concentric geometry, which may facilitate their production. Alternatively or additionally, one or more barrier layers may formed of a solid plate having multiple holes as recesses formed.

The two or more barrier layers may each have thickness in the range of 1 mm to 5 mm. This may provide a suitable rigidity of the barrier layers to sustain a pressure experienced from the stream of lacquer mixture impinging on the barrier layers. All barrier layers of the diversion element may have the same or an identical thickness. However, according to some embodiments, the barrier layers may vary in their thicknesses. A distance between adjacent barrier layers of the two or more barrier layers may be in the range of 5 mm to 15 mm. This may provide a suitable diversion of the stream of lacquer mixture passing through the diversion element. According to an optional embodiment, the diversion element comprises exactly two barrier layers.

The barrier layers may be made of the same material as the side wall of the lacquer basin. This may avoid undesired galvanic effects occurring between the barrier layers and the side wall of the lacquer basin. Suitable materials for the barrier layers may for instance include one or more of the following materials: metal materials, stainless steel, aluminum, plastic materials, ceramics, and dielectric materials.

The inlet section of the lacquer basin may have a conical shape. The inlet section may also be referred to as the bottom of the lacquer basin. This configuration of the inlet section offers an optimization of the stream of lacquer basin into the lacquer basin and into the process section. In particular, this configuration may be well suited to avoid dead zones in the lacquer basin having a velocity of zero or close to zero, which otherwise might favor the local hardening of the lacquer mixture and the undesired formation of particles and lumps, which may form contaminants being detrimental for the coating results.

The process section may have a cylindrical shape. This may ensure or favor a constant and homogeneous laminar flow of the stream of the lacquer mixture inside the process section, as may be desired for a homogenous coating result.

The barrier layers and/or the diversion element as such may be provided with a smooth surface in order to avoid any turbulences and/or vortexes arising from friction between the stream of the lacquer mixture and the barrier layers. For instance, the barrier layers may be polished and possibly electro-polished. Furthermore, the barrier layers and the diversion element may be provided without any ridges for avoiding turbulences and vortexes.

The method comprises the step of removing the ophthalmic lens from the process section and curing the lacquer mixture adhering to the ophthalmic lens. Curing the lacquer mixture adhering to the ophthalmic lens may comprise or consist of a passive curing process including drying the adhering the lacquer mixture solely by exposure to the ambient air or a different gas. Alternatively or additionally, the step of curing the adhering lacquer mixture may include actively heating the ophthalmic lens and/or exposing the ophthalmic lens to radiation, such as infrared and/or ultraviolet radiation in order to enhance the curing process.

It is understood by a person skilled in the art that the above-described features and the features in the following description and figures are not only disclosed in the explicitly disclosed embodiments and combinations, but that also other technically feasible combinations as well as the isolated features are comprised by the disclosure. In the following, several optional embodiments and specific examples are described with reference to the figures for illustrating the disclosure without limiting the disclosure to the described embodiments.

Further optional embodiments will be illustrated in the following with reference to the drawings.
Figures 1A and 1B depict in a schematic view a dip coating device for dip coating one or more ophthalmic lenses.
Figure 2 shows a detailed cross sectional view of a lacquer basin according to an optional embodiment.
Figures 3A and 3B depict the two barrier layers of the diversion element shown in Figure 2 in a projectional view.
Figures 4A and 4B present a comparison of a simulated flow of the lacquer mixture inside a conventional lacquer basin without a diversion element and a lacquer basin according to an optional embodiment including a diversion element.
Figure 5 schematically illustrates a method for dip coating an ophthalmic lens according to an optional embodiment.
Figure 6 schematically depicts an ophthalmic lens having a coating applied to its surfaces.

In the drawings the same reference signs are used for corresponding or similar features in different drawings.

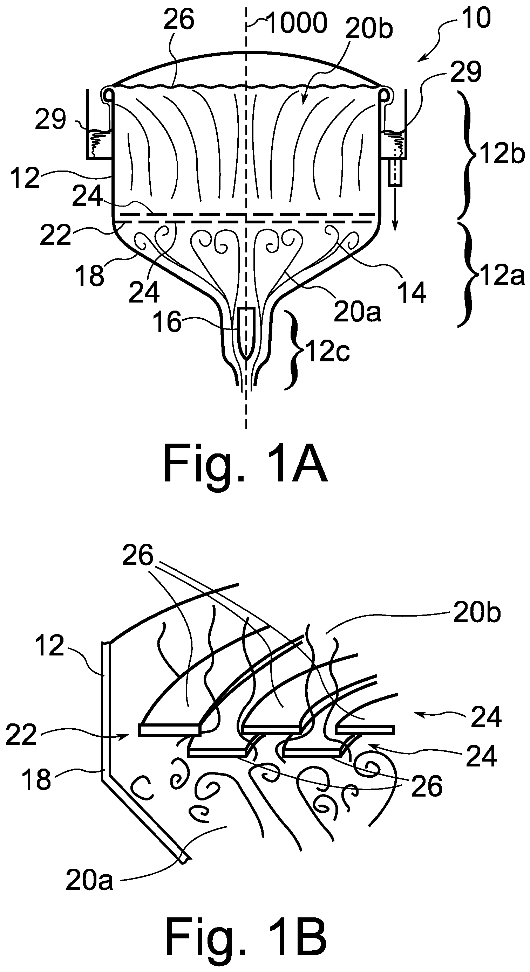

Figure 1A depicts in a schematic view a dip coating device 10 for dip coating one or more ophthalmic lenses. The dip coating device 10 has a lacquer basin 12 receiving a stream of a lacquer mixture 14 flowing in an upward direction. On the upper side, the lacquer basin 12 has an opening for inserting the one or more ophthalmic lenses into the lacquer basin 12 to dip coat the one or more ophthalmic lenses in the lacquer mixture 14.

The lacquer basin 12 has an inlet section 12a in the lower part and a process section 12b in the upper part. The dip coating device 10 is further provided with an injection nozzle 16 for injecting the stream of the lacquer mixture 14 in a diffused manner into the lacquer basin 12.

In the inlet section 12a the side wall 18 has a conical shape opening up in an upward direction along the central axis 1000 of the lacquer basin 12. On top of the inlet section 12a the process section 12b adjoins the inlet section 12a, wherein the side wall 18 has a cylindrical shape in the process section 12b. Underneath the inlet section 12a, the lacquer basin 12 comprises a sedimentation section 12c for collecting sedimented particles and contaminants which sunk to the bottom. The sedimentation section 12c is arranged and adapted such that the sedimented particles and contaminants are collected underneath the injection nozzle 16 in order to avoid re-injecting the sedimented particles and contaminants when injecting the lacquer mixture 14.

In the inlet section 12a the stream of the lacquer mixture 14 exhibits a turbulent flow 20a resulting in vortexes generated in the lacquer mixture 14. This turbulent flow 20a originates in the injection process and shall be prevented to extend into the process section 12b, as the turbulent flow could be detrimental for achieving a homogeneous coating resulting from the dip coating process.

The lacquer basin 12 further comprises a diversion element 22 in order to prevent the turbulent flow extending into the process section 12b. The diversion element 22 comprises at least two barrier layers 24 presenting an obstacle for the stream of the lacquer mixture 14 on its flow path to the process section 12b. The diversion element 22 deflects the stream of the lacquer mixture 14 and by this provides the stream of lacquer mixture 14 with a laminar flow 20b. The laminar flow 20b is directed into an upward direction and allows providing homogeneous coatings onto one or more ophthalmic lenses dipped into the lacquer mixture 14 in the process section 12b. Moreover, the diversion element 22 avoids the level 26 of the lacquer mixture 14 in the lacquer basin 12 forming a bulge, which further enhances the dip coating process. After reaching the upper end of the lacquer basin 12 defining the level 26 of the lacquer mixture 14, the lacquer mixture 14 overflows the lacquer basin 12 and is collected in an overflow channel 29 from where it is fed into a supply tubing (not shown) for filtering, cooling, readjusting the mixture of lacquer and solvent and re-injection into the lacquer basin 12 through the injection nozzle 16.

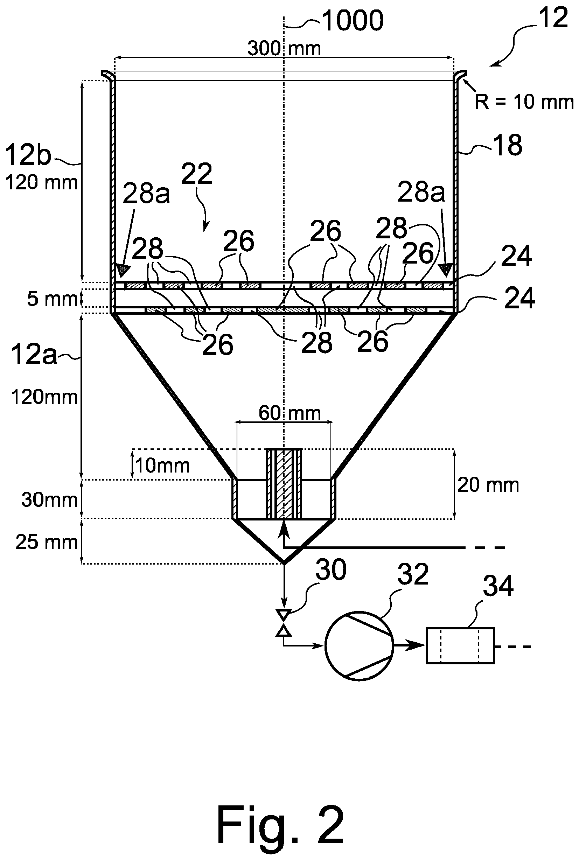

Figure 1B presents in a schematic sketch a more detailed view of the diversion element 22. The diversion element 22 comprises two barrier layers 24, each of which extends in a plane perpendicular to the central axis 1000 of the lacquer basin 12 and wherein planes of the respective barrier layers 24 are spaced apart from each other along the central axis 1000. Each of the barrier layers 24 comprises multiple circular lamellas 26 being spaced apart from each other by circular recesses 28 (see Figure 2). In combination, the two barrier layers 24 of the diversion element 22 cover the entire cross sectional area of the inside of the lacquer basin 12 perpendicular to the central axis 1000 except of a recess directly at the inner surface of the side wall 18. The lamellas 26 and recesses 28 of the barrier layers 24 are arranged such that they complement the lamellas 26 and recesses 28 of the respective other barrier layer 24. Thus, in a projectional view, the barrier layers 24 cover the entire cross sectional area of the inside of the lacquer basin 12 except the recess at the side wall 18. Areas, in which one of the barrier layers 24 exhibits a recess 28 (see Figure 2), will be covered by a lamella 26 of the respective other barrier layer 24. However, the barrier layers 24 are adapted such that they do not exhibit an overlap of their lamellas in a projectional view, i.e. there are no areas being covered by both barrier layers. The diversion element 22 requires the stream of the lacquer mixture 14 impinging from the bottom in a turbulent flow to divert the flow direction, which results in the stream of the lacquer mixture 14 having a laminar flow after penetrating the diversion element and streaming into the process section 12b. The ratio of the areas forming a recess 28 and forming a lamella 26 in each of the barrier layers 24 may be chosen such that the diversion element 22 offers a high degree of permeability in order to avoid a backlog and dead spaces of the lacquer mixture 14 impinging the diversion element 22 at the side facing the inlet section 12a.

Figure 2 shows a detailed cross sectional view through the central axis 1000 of a lacquer basin 12 of a lacquer basin 12 according to an optional embodiment.

The lacquer basin 12 has a conical inlet section 12a having a height of 120 mm and a cylindrical process section 12b having a height of 120 mm. The inner diameter of the cylindrical process section 12b is 300 mm. Between the process section 12b and the inlet section 12a a diversion element 22 is arranged having two barrier layers 24 arranged parallel to each other and perpendicular to the central axis 1000 between the inlet section 12a and the process section 12b. As can be seen, the lamellas 26 are spaced from the adjacent lamellas 26 by respective recesses 28, wherein the recesses 28 and lamellas 26 of the lower barrier layer 24 are complementary to the lamellas 26 and recesses 28 of the upper barrier layer 24 to cover the entire cross sectional area of the lacquer basin perpendicular to the central axis 1000 except the recess at the side wall 18 and without forming an overlap of the lamellas 26. The barrier layers 24 have a thickness of 2 mm each and are spaced apart from each other at a distance of 8 mm. The diversion element 22 provides a recess 28a adjacent to the side wall, which may allow particles and/or contaminations to sediment in a downward direction along the side wall 18.

At the bottom of the inlet section 12a an injection nozzle 16 is provided surrounded by a sedimentation section 12c. The injection nozzle is adapted as a ring nozzle and extends 10 mm into the inlet section. The sedimentation section 12c has a cylindrical part with a height of 30 mm and a conical part with a height of 25 mm for collecting the sedimented contaminants.

Below the lacquer basin 12, further components of the dip coating device 10 are exemplarily shown, which include a valve 30, a pump 32 and a filter element 34, which are integrated into the supply tubing for supplying circulating the lacquer mixture 14 to the lacquer basin 12.

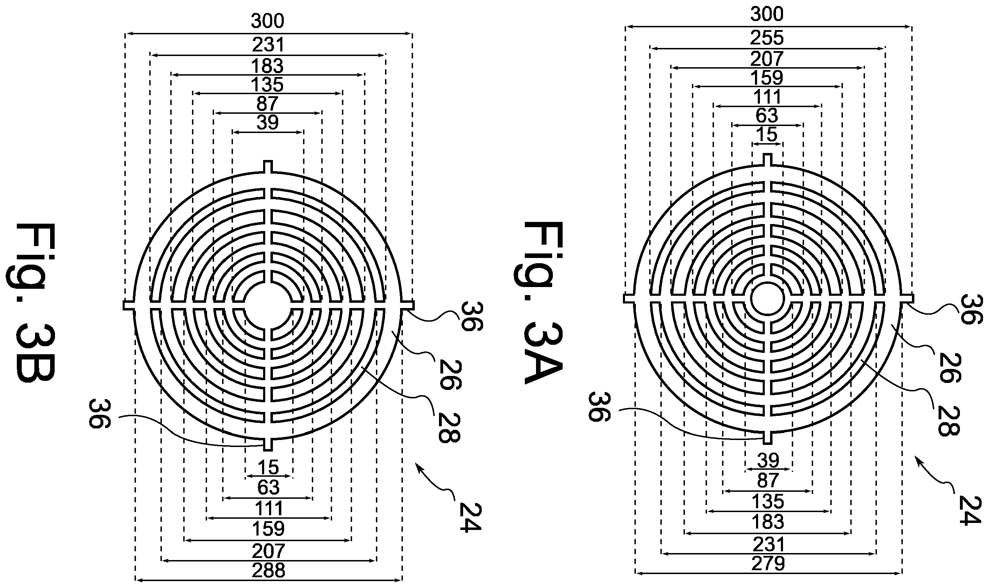

Figures 3A and 3B depict the two barrier layers 24 of the diversion element 22 shown in Figure 2 in a projectional view, wherein the projection area is perpendicular to the central axis 1000. Figure 3A shows the upper barrier layer 24 facing the process section 12b and Figure 3B shows the lower barrier layer 24 facing the inlet section 12a. As can be seen, both barrier layers 24 are formed by circular lamellas 26 spaced apart from the adjacent lamellas 26 by recesses 28. The lamellas 26 are supported by a support frame 36, which may also be used to mechanically fix the barrier layers to the side wall 18 of the lacquer basin 12. The arrows at the side indicate the dimensions of the respective lamellas 26 and recesses 28 in millimeters. When comparing Figures 3A and 3B it becomes apparent that the lamellas 26 and recesses 28 of one of the barrier layers are complementary to the lamellas and recesses of the other barrier layer 24. When mounting both barrier layers 24 into the lacquer basin, as shown in Figure 2, the lamellas 26 will exhibit no overlap with the lamellas of the other barrier layer 24 but both barrier layers 24 together will still cover the entire cross sectional area of the lacquer basin 12.

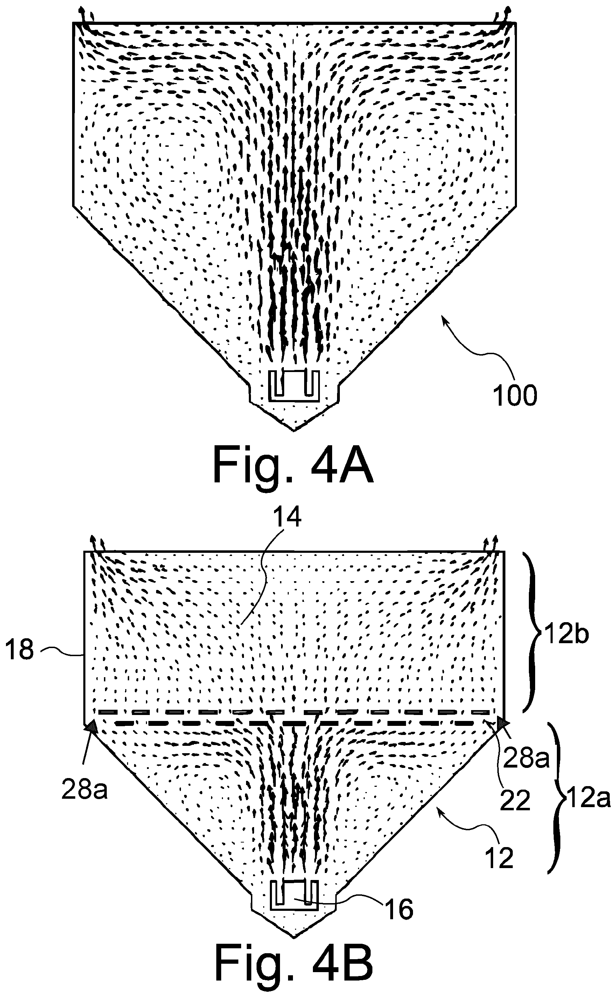

Figures 4A and 4B present a comparison of a simulated flow of the lacquer mixture 14 inside a conventional lacquer basin 100 having no diversion element (Figure 4A) and a lacquer basin according to an optional embodiment of the disclosure having a diversion element 22 (Figure 4B). The simulated data is based on a lacquer basin 12 having the dimensions as provided in Figures 2, 3A and 3B. The simulation data clearly shows that in the conventional lacquer basin 100 having no diversion element (Figure 4A) the turbulent flow extends over the entire volume of the conventional lacquer basin 100 and forms prominent vortexes in the process section. Hence, the dip coating process is affected by the turbulent flow of the stream of lacquer mixture 14. Contrary to the scenario depicted in Figure 4A, the lacquer basin 12 according to the optional embodiment of the disclosure having a diversion element 22 effectively restricts the turbulent flow and the vortexes of the stream of lacquer mixture 14 to the area below the diversion element 22, which is the inlet section 12a. Due to the diversion element 22 provided at the transition from the inlet area 12a to the process section 12b a smooth and homogeneous laminar flow of the stream of lacquer mixture can be provided above the diversion element 22, which is well suited for obtaining homogeneous dip coating results. The recess 28a adjacent to the side wall may allow particles and/or contaminations to sediment downward along the side wall 18.

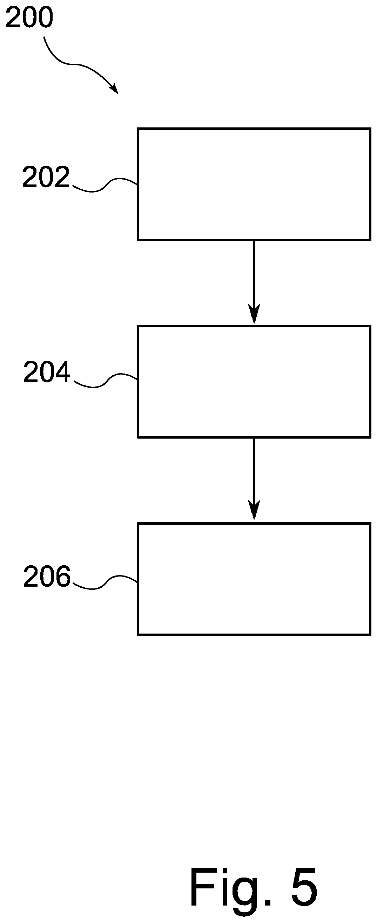

Figure 5 schematically illustrates a method 200 for dip coating an ophthalmic lens. In a first step 202 of the method 200, a coating device 10 is provided, wherein the coating device 10 may be adapted according to the optional embodiment described with reference to the Figures 1A and 1B.

In a second step 204, the ophthalmic lens is dipped into the process section 12b of the coating device 10 such that the ophthalmic lens is entirely immersed in the stream of the lacquer mixture 14. This ensures that the entire surfaces of the ophthalmic lens, which are intended to be coated, are in direct contact with the laminar flow of the lacquer mixture 14. Hence, the surfaces of the ophthalmic lens are covered with lacquer mixture 14 which adheres to the ophthalmic lens. Due to the laminar flow and the absence of vortexes and/or turbulences in the processing section, a homogeneous coverage and adhesion of the lacquer mixture 14 to the surfaces of the ophthalmic lenses dipped into the stream of lacquer mixture 14 can be obtained.

In a third step 206, the ophthalmic lens is removed from the process section 12b and, hence, from the stream of the lacquer mixture 14. The lacquer mixture adhering to the ophthalmic lens is then cured. The curing process may be carried out solely by the exposure to the ambient air and an accompanying increase in temperature and an evaporation of the solvent. The curing process leaves behind the desired coating(s) on the ophthalmic lens. According to an optional embodiment the curing process may be supported by exposing the ophthalmic lens to heat and/or radiation after removal from the lacquer mixture to enhance the evaporation of the solvent and/or the hardening of the coating.

According to an optional embodiment, the method 200 and/or the coating device 10 may be adapted to dip coat multiple ophthalmic lenses at the same time. For instance, multiple ophthalmic lenses may be provided on a suitable support frame and may be simultaneously dipped into the process section 12b. This allows treating several ophthalmic lenses at the same time. The method 200 may be part of a method for manufacturing an ophthalmic lens 300.

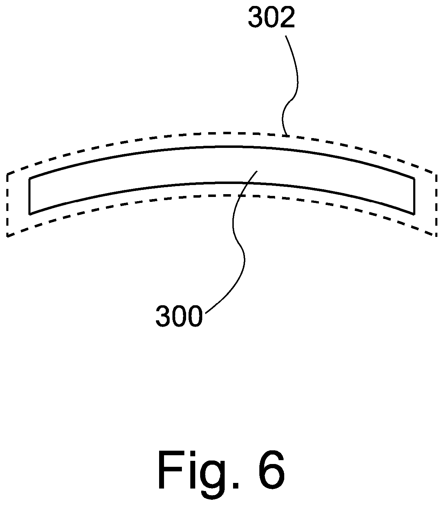

Figure 6 schematically depicts an ophthalmic lens 300 having a coating 302 applied to its surfaces. The coating 302 has been applied to the ophthalmic lens 300 by using a method for dip coating as described with reference to Figure 5. The dip coating process allows achieving a coating covering all surfaces of the ophthalmic lens with a homogeneous thickness. The thickness of the coating 302 with respect to the thickness of the ophthalmic lens 300 may be exaggerated and may not necessarily represent the relation of thickness of a real ophthalmic lens and a coating.

### List of reference signs

- 10: dip coating device
- 12: lacquer basin
- 12a: inlet section
- 12b: process section
- 12c: sedimentation section
- 14: lacquer mixture
- 16: injection nozzle
- 18: sidewall of lacquer basin
- 20a: turbulent flow
- 20b: laminar flow
- 22: diversion element
- 24: barrier layer
- 26: lamella
- 28: recess
- 28a: recess adjacent to sidewall
- 29: overflow channel
- 30: valve
- 32: pump
- 34: filter element
- 36: support frame

- 100: conventional lacquer basin

- 200: method for dip coating an ophthalmic lens
- 202 - 206: method steps

- 300: ophthalmic lens having a coating applied with a dip coating method
- 302: coating of ophthalmic lens

- 1000: central axis of lacquer basin

## Claims

1. Lacquer basin (12) for a dip coating device (10) for dip coating an ophthalmic lens, the lacquer basin (12) comprising:
- an inlet section (12a) arranged at a lower end of the lacquer basin (12) and adapted to receive a stream of a lacquer mixture (14) injected into the lacquer basin (12);
- a process section (12b) adjoining the inlet section (12a) at an upper end of the inlet section (12a), wherein the process section (12b) is adapted to provide a process volume for dip coating the ophthalmic lens in the stream of the lacquer mixture (14);
- a diversion element (22) arranged at or near a transition from the inlet section (12a) to the process section (12b) and adapted to divert at least a part of the stream of the lacquer mixture (14) such as to reduce or avoid turbulences of the stream of lacquer mixture (14) in the process section (12b).
**characterized in that**
- the diversion element (22) comprises a recess (28a) adjacent to a sidewall (18) of the lacquer basin (12) and two or more barrier layers (24) arranged at different levels spaced apart from each other, wherein each of the barrier layers (24) has multiple recesses (28) and intermittently covers the cross sectional area of the lacquer basin (12) and wherein the diversion element (22) is adapted to homogenize a flow of the stream of the lacquer mixture and to provide a laminar flow in the process section of the lacquer basin; and
- **in that** the lacquer basin (12) further comprises an overflow channel (29) arranged directly at an outer side of the side wall of the lacquer basin, wherein the overflow channel (29) is adapted to collect an overflown lacquer mixture provoked by the laminar flow and a displacement of volume of the lacquer mixture due to an insertion of the ophthalmic lens and feed the overflown lacquer mixture into a tubing system as a return flux.

2. Lacquer basin (12) according to claim 1, wherein the recess (28a) adjacent to the sidewall (18) of the lacquer basin (12) is interrupted by one or more mechanical fixation elements fixating the diversion element (22) to the sidewall (18).

3. Lacquer basin (12) according to claim 1 or 2, wherein a width of the recess (28a) adjacent to the sidewall (18) of the lacquer basin (12) is 0,2 mm or more.

4. Lacquer basin (12) according to any one of the preceding claims, wherein a width of the recess (28a) adjacent to the sidewall (18) of the lacquer basin (12) is 2 mm or less.

5. Lacquer basin (12) according to any one of the preceding claims, wherein the width of the recess (28a) adjacent to the sidewall (18) is constant along the entire inner circumference of the sidewall (18).

6. Lacquer basin (12) according to any one of the preceding claims, wherein the recess (28a) adjacent to the side wall (18) of the lacquer basin (12) extends around the entire inner circumference of the sidewall (18).

7. Lacquer basin (12) according to any one of the preceding claims, wherein the lacquer basin (12) has a vertically extending central axis (1000) and wherein the process section (12b) adjoins the inlet section (12a) along the central axis (1000) of the lacquer basin (12); and wherein the diversion element (22) optionally extends perpendicular to the central axis (1000) of the lacquer basin (12).

8. Lacquer basin (12) according to any one of the preceding claims, wherein each of the barrier layers (24) is permeable for the stream of the lacquer mixture (14) through the multiple recesses (28) and wherein the two or more barrier layers (24) are adapted and/or arranged such that their recesses (28) are arranged in a complementary manner over the cross sectional area of the lacquer basin (12); and wherein the combination of the two or more barrier layers (24) optionally cover at least 70%, optionally at least 80%, optionally at least 90% and optionally at least 95% of the cross sectional area of the lacquer basin (12).

9. Lacquer basin (12) according to any one of the preceding claims, wherein the combination of the two or more barrier layers (24) covers the entire cross sectional area of the lacquer basin (12) except the recess adjacent to a sidewall (18) of the lacquer basin (12).

10. Lacquer basin (12) according to any one of the preceding claims, wherein the barrier layers (24) have a grid-like structure and/or a mesh-like structure.

11. Lacquer basin (12) according to any one of the preceding claims, wherein at least some of the recesses (28) of the barrier layers (24) have a shape selected from a group comprising a ring-shape, a circular shape, and a polygonal shape.

12. Lacquer basin (12) according to any one of the preceding claims, wherein the two or more barrier layers (24) each have thickness in the range of 1 mm to 5 mm and wherein a distance between adjacent barrier layers (24) of the two or more barrier layers (24) is in the range of 5 mm to 15 mm.

13. Lacquer basin (12) according to any one of the preceding claims, wherein the lacquer basin (12) is adapted to restrict a turbulent flow (20a) of the stream of lacquer mixture (14) to the inlet section (12a).

14. Coating device (10) for dip coating an ophthalmic lens having a lacquer basin (12) according to any one of the preceding claims.

15. Method (200) for dip coating an ophthalmic lens, the method comprising:
- providing a coating device (10) according to claim 14;
- dipping the ophthalmic lens into the process section (12b) of the coating device (10) such that the ophthalmic lens is entirely immersed in the stream of the lacquer mixture (14);
- removing the ophthalmic lens from the process section (12b) and curing the lacquer mixture adhering to the ophthalmic lens.

16. Method for manufacturing an ophthalmic lens, the method comprising a method for dip coating an ophthalmic lens according to claim 15.

## Patentansprüche

1. Lackwanne (12) für eine Tauchbeschichtungsvorrichtung (10) zum Tauchbeschichten einer ophthalmischen Linse, wobei die Lackwanne (12) umfasst:
- einen Einlassabschnitt (12a), der an einem unteren Ende der Lackwanne (12) angeordnet ist und eingerichtet ist, um einen Strom einer Lackmischung (14) zu empfangen, die in die Lackwanne (12) injiziert wird;
- einen Prozessabschnitt (12b), der an den Einlassabschnitt (12a) an einem oberen Ende des Einlassabschnitts (12a) angefügt ist, wobei der Prozessabschnitt (12b) eingerichtet ist, um ein Prozessvolumen zum Tauchbeschichten der ophthalmischen Linse in dem Strom der Lackmischung (14) bereitzustellen;
- ein Umlenkelement (22), das an oder nahe einem Übergang von dem Einlassabschnitt (12a) zu dem Prozessabschnitt (12b) angeordnet ist und eingerichtet ist, um mindestens einen Teil des Stroms der Lackmischung (14) umzulenken, um so Turbulenzen des Stroms der Lackmischung (14) in dem Prozessabschnitt (12b) zu reduzieren oder zu vermeiden,
**dadurch gekennzeichnet, dass**
- das Umlenkelement (22) eine Aussparung (28a) neben einer Seitenwand (18) der Lackwanne (12) und zwei oder mehr Barriereschichten (24) umfasst, die auf unterschiedlichen Niveaus voneinander beabstandet angeordnet sind, wobei jede der Barriereschichten (24) mehrere Aussparungen (28) aufweist und intermittierend die Querschnittfläche der Lackwanne (12) bedeckt, und wobei das Umlenkelement (22) eingerichtet ist, um eine Strömung des Stroms der Lackmischung zu homogenisieren und in dem Prozessabschnitt der Lackwanne eine laminare Strömung bereitzustellen; und
- dass die Lackwanne (12) des Weiteren einen Überströmkanal (29) umfasst, der direkt an einer Außenseite der Seitenwand der Lackwanne angeordnet ist, wobei der Überströmkanal (29) eingerichtet ist, um eine übergeflossene Lackmischung zu sammeln, die durch die laminare Strömung und eine Verdrängung des Volumens der Lackmischung infolge einer Einbringung der ophthalmischen Linse herbeigeführt wurde, und die übergeflossene Lackmischung als Rückkehrfluss in ein Rohrsystem einzuspeisen.

2. Lackwanne (12) nach Anspruch 1, wobei die Aussparung (28a) neben der Seitenwand (18) der Lackwanne (12) durch ein oder mehrere mechanische Fixierelemente unterbrochen ist, die das Umlenkelement (22) an der Seitenwand (18) fixieren.

3. Lackwanne (12) nach Anspruch 1 oder 2, wobei eine Breite der Aussparung (28a) neben der Seitenwand (18) der Lackwanne (12) 0,2 mm oder mehr beträgt.

4. Lackwanne (12) nach einem der vorhergehenden Ansprüche, wobei eine Breite der Aussparung (28a) neben der Seitenwand (18) der Lackwanne (12) 2 mm oder weniger beträgt.

5. Lackwanne (12) nach einem der vorhergehenden Ansprüche, wobei eine Breite der Aussparung (28a) neben der Seitenwand (18) entlang des gesamten Innenumfangs der Seitenwand (18) konstant ist.

6. Lackwanne (12) nach einem der vorhergehenden Ansprüche, wobei die Aussparung (28a) neben der Seitenwand (18) der Lackwanne (12) sich um den gesamten Innenumfang der Seitenwand (18) herum erstreckt.

7. Lackwanne (12) nach einem der vorhergehenden Ansprüche, wobei die Lackwanne (12) eine sich vertikal erstreckende Mittelachse (1000) aufweist, und wobei der Prozessabschnitt (12b) entlang der Mittelachse (1000) der Lackwanne (12) an den Einlassabschnitt (12a) angefügt ist; und wobei das Umlenkelement (22) sich gegebenenfalls rechtwinklig zu der Mittelachse (1000) der Lackwanne (12) erstreckt.

8. Lackwanne (12) nach einem der vorhergehenden Ansprüche, wobei jede der Barriereschichten (24) für den Strom der Lackmischung (14) durch die mehreren Aussparungen (28) hindurch permeabel ist, und wobei die zwei oder mehr Barriereschichten (24) so eingerichtet und/oder angeordnet sind, dass ihre Aussparungen (28) in einer komplementären Weise über die Querschnittfläche der Lackwanne (12) angeordnet sind; und wobei die Kombination der zwei oder mehr Barriereschichten (24) gegebenenfalls mindestens 70 %, gegebenenfalls mindestens 80 %, gegebenenfalls mindestens 90 % und gegebenenfalls mindestens 95 % der Querschnittfläche der Lackwanne (12) bedeckt.

9. Lackwanne (12) nach einem der vorhergehenden Ansprüche, wobei die Kombination der zwei oder mehr Barriereschichten (24) die gesamte Querschnittfläche der Lackwanne (12) mit Ausnahme der Aussparung neben einer Seitenwand (18) der Lackwanne (12) bedeckt.

10. Lackwanne (12) nach einem der vorhergehenden Ansprüche, wobei die Barriereschichten (24) eine gitterartige Struktur und/oder eine maschenartige Struktur aufweisen.

11. Lackwanne (12) nach einem der vorhergehenden Ansprüche, wobei mindestens einige der Aussparungen (28) der Barriereschichten (24) eine Form ausgewählt aus der Gruppe aufweisen, die eine Ringform, eine Kreisform und eine vieleckige Form umfasst.

12. Lackwanne (12) nach einem der vorhergehenden Ansprüche, wobei die zwei oder mehr Barriereschichten (24) jeweils eine Dicke im Bereich von 1 mm bis 5 mm aufweisen, und wobei ein Abstand zwischen benachbarten Barriereschichten (24) der zwei oder mehr Barriereschichten (24) im Bereich von 5 mm bis 15 mm liegt.

13. Lackwanne (12) nach einem der vorhergehenden Ansprüche, wobei die Lackwanne (12) eingerichtet ist, um eine turbulente Strömung (20a) des Stroms der Lackmischung (14) zu dem Einlassabschnitt (12a) zu beschränken.

14. Beschichtungsvorrichtung (10) zum Tauchbeschichten einer ophthalmischen Linse, welche eine Lackwanne (12) gemäß einem der vorhergehenden Ansprüche aufweist.

15. Verfahren (200) zum Tauchbeschichten einer ophthalmischen Linse, wobei das Verfahren umfasst:
- Bereitstellen einer Beschichtungsvorrichtung (10) nach Anspruch 14;
- Tauchen der ophthalmischen Linse in den Prozessabschnitt (12b) der Beschichtungsvorrichtung (10), so dass die ophthalmische Linse vollständig in den Strom der Lackmischung (14) eingetaucht ist;
- Entfernen der ophthalmischen Linse aus dem Prozessabschnitt (12b) und Härten der Lackmischung, die an der ophthalmischen Linse haftet.

16. Verfahren zum Fertigen einer ophthalmischen Linse, wobei das Verfahren ein Verfahren zum Tauchbeschichten einer ophthalmischen Linse nach Anspruch 15 umfasst.

## Revendications

1. Cuve de laque (12) pour un dispositif de revêtement par immersion (10) pour revêtir par immersion une lentille ophtalmique, la cuve de laque (12) comprenant :
- une section d'entrée (12a) agencée à une extrémité inférieure de la cuve de laque (12) et adaptée pour recevoir un courant d'un mélange de laque (14) injecté dans la cuve de laque (12) ;
- une section de traitement (12b) contiguë à la section d'entrée (12a) à une extrémité supérieure de la section d'entrée (12a), dans laquelle la section de traitement (12b) est adaptée pour fournir un volume de traitement pour revêtir par immersion la lentille ophtalmique dans le courant du mélange de laque (14) ;
- un élément de déviation (22) agencé à une transition, ou près de celle-ci, de la section d'entrée (12a) à la section de traitement (12b), et adapté pour dévier au moins une partie du courant du mélange de laque (14) de manière telle à réduire ou éviter des turbulences du courant de mélange de laque (14) dans la section de traitement (12b),
**caractérisée en ce que**
- l'élément de déviation (22) comprend un évidement (28a) adjacent à une paroi latérale (18) de la cuve de laque (12) et deux, ou plus de deux, couches barrières (24) agencées à différents niveaux espacés les uns des autres, dans laquelle chacune des couches barrières (24) a de multiples évidements (28) et couvre de façon intermittente la superficie de section latérale de la cuve de laque (12), et dans laquelle l'élément de déviation (22) est adapté pour homogénéiser un écoulement du courant du mélange de laque et pour fournir un écoulement laminaire dans la section de traitement de la cuve de laque ; et
- **en ce que** la cuve de laque (12) comprend en outre un canal de trop-plein (29) agencé directement sur un côté extérieur de la paroi latérale de la cuve de laque, dans laquelle le canal de trop-plein (29) est adapté pour collecter un mélange de laque écoulé en trop-plein provoqué par l'écoulement laminaire et un déplacement de volume du mélange de laque dû à une insertion de la lentille ophtalmique et effectuer l'alimentation en le mélange de laque, écoulé en trop-plein, dans un système de tuyaux, en tant que flux de retour.

2. Cuve de laque (12) selon la revendication 1, dans laquelle l'évidement (28a) adjacent à la paroi latérale (18) de la cuve de laque (12) est interrompu par un ou plusieurs éléments de fixation mécaniques fixant l'élément de déviation (22) à la paroi latérale (18).

3. Cuve de laque (12) selon la revendication 1 ou 2, dans laquelle une largeur de l'évidement (28a) adjacent à la paroi latérale (18) de la cuve de laque (12) est de 0,2 mm ou plus.

4. Cuve de laque (12) selon l'une quelconque des revendications précédentes, dans laquelle une largeur de l'évidement (28a) adjacent à la paroi latérale (18) de la cuve de laque (12) est de 2 mm ou moins.

5. Cuve de laque (12) selon l'une quelconque des revendications précédentes, dans laquelle la largeur de l'évidement (28a) adjacent à la paroi latérale (18) est constant le long de la circonférence intérieure entière de la paroi latérale (18).

6. Cuve de laque (12) selon l'une quelconque des revendications précédentes, dans laquelle l'évidement (28a) adjacent à la paroi latérale (18) de la cuve de laque (12) s'étend autour de la circonférence intérieure entière de la paroi latérale (18).

7. Cuve de laque (12) selon l'une quelconque des revendications précédentes, dans laquelle la cuve de laque (12) a un axe central s'étendant verticalement (1000), et dans laquelle la section de traitement (12b) est contiguë à la section d'entrée (12a) le long de l'axe central (1000) de la cuve de laque (12) ; et dans laquelle l'élément de déviation (22) s'étend, facultativement, perpendiculairement à l'axe central (1000) de la cuve de laque (12).

8. Cuve de laque (12) selon l'une quelconque des revendications précédentes, dans laquelle chacune des couches barrières (24) est perméable pour le courant du mélange de laque (14) à travers les multiples évidements (28), et dans laquelle les deux, ou plus de deux, couches barrières (24) sont adaptées et/ou agencées de manière telle que leurs évidements (28) sont agencés de manière complémentaire par-dessus la superficie de section latérale de la cuve de laque (12) ; et dans laquelle la combinaison des deux, ou plus de deux, couches barrières (24) couvre facultativement au moins 70 %, facultativement au moins 80 %, facultativement au moins 90 % et facultativement au moins 95 % de la superficie de section latérale de la cuve de laque (12).

9. Cuve de laque (12) selon l'une quelconque des revendications précédentes, dans laquelle la combinaison des deux, ou plus de deux, couches barrières (24) couvre la superficie de section transversale entière de la cuve de laque (12) à l'exception de l'évidement adjacent à une paroi latérale (18) de la cuve de laque (12).

10. Cuve de laque (12) selon l'une quelconque des revendications précédentes, dans laquelle les couches barrières (24) ont une structure de type grille et/ou une structure de type maille.

11. Cuve de laque (12) selon l'une quelconque des revendications précédentes, dans laquelle au moins certains des évidements (28) des couches barrières (24) ont une forme sélectionnée parmi un groupe comprenant une forme annulaire, une forme circulaire, et une forme polygonale.

12. Cuve de laque (12) selon l'une quelconque des revendications précédentes, dans laquelle les deux, ou plus de deux, couches barrières (24) ont chacune une épaisseur dans la plage de 1 mm à 5 mm, et dans laquelle une distance entre des couches barrières adjacentes (24) des deux, ou plus de deux, couches barrières (24) est dans la plage de 5 mm à 15 mm.

13. Cuve de laque (12) selon l'une quelconque des revendications précédentes, dans laquelle la cuve de laque (12) est adaptée pour limiter un écoulement turbulent (20a) du courant de mélange de laque (14) vers la section d'entrée (12a).

14. Dispositif de revêtement (10) pour revêtir par immersion une lentille ophtalmique ayant une cuve de laque (12) selon l'une quelconque des revendications précédentes.

15. Procédé (200) pour revêtir par immersion une lentille ophtalmique, le procédé comprenant :
- la fourniture d'un dispositif de revêtement (10) selon la revendication 14 ;
- l'immersion de la lentille ophtalmique dans la section de traitement (12b) du dispositif de revêtement (10) de manière telle que la lentille ophtalmique est entièrement immergée dans le courant du mélange de laque (14) ;
- le retrait de la lentille ophtalmique à partir de la section de traitement (12b), et le durcissement du mélange de laque collant à la lentille ophtalmique.

16. Procédé de fabrication d'une lentille ophtalmique, le procédé comprenant un procédé pour revêtir par immersion une lentille ophtalmique selon la revendication 15.
